(19) Europäisches Patentamt
European Patent Office
Office européen des brevets

(11) **EP 2 750 270 A1**

(12) **EUROPEAN PATENT APPLICATION**

(43) Date of publication:
02.07.2014 Bulletin 2014/27

(51) Int Cl.:
*H02M 1/12* (2006.01)        *H02J 3/38* (2006.01)
*H02M 7/5387* (2007.01)

(21) Application number: 12199476.8

(22) Date of filing: 27.12.2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Deng, Heng**
**7330 Brande (DK)**
• **Yin, Bo**
**7330 Brande (DK)**

(54) **Harmonic current controller**

(57)     It is described a harmonic current controller for controlling harmonic currents being generated by a grid-side converter of a frequency converter. The frequency converter is adapted to convert an electrical input power of a power supply unit having a first frequency into an electrical output power having a second frequency, wherein the electrical output signal is provided to a grid. A grid-side controller is adapted to control the grid side part of the power conversion, wherein, during the conversion, at least some harmonic currents are generated by the grid side converter. The harmonic current controller (100) comprises an input terminal being adapted to receive a first (101) and a second (102) current feedback signal received from a frame transformation of a measured three-phase grid current, and a first (103) and a second (104) harmonic current reference signal for each harmonic current to be controlled, a comparator unit (106) being adapted to compare the first and the second current feedback signal with the first and the second harmonic current reference signal, respectively, wherein the output signals of the comparator unit are a first regulating error signal (107) and a second regulating error signal (108), and a regulating unit (109) being adapted to receive the first regulating error signal (107) and the second regulating error signal (108), to determine a first harmonic voltage control signal (110) and a second harmonic voltage control signal (111) based on the error signals (107, 108), wherein the harmonic current controller (100) is adapted to supply the voltage control signals to a further unit of the grid-side controller in order to control the harmonic currents generated by the grid side converter.

## FIG 1

**Description**

Field of invention

The present invention relates in general to the reduction of wind turbine or wind farm harmonic currents by regulating harmonic currents of a grid-side converter of a wind turbine. In particular, the present invention relates to a harmonic current controller for controlling harmonic currents being generated by a grid-side converter of a frequency converter. Further, the present invention relates to a current controller comprising such a harmonic current controller and to a frequency converter comprising such a current controller. Furthermore, the present invention relates to a power generation system including the frequency converter. Moreover, the present invention relates to a method for controlling harmonic currents being generated by a grid-side converter of a frequency converter. Beyond this, the present invention relates to a computer program for controlling harmonic currents being generated by a grid-side controller of a frequency converter.

Art Background

One or more power generation systems, such as wind turbines, may be connected to a utility grid to supply electric energy to the utility grid. The power provided by the wind turbines and the power needed by the utility grid may have different frequencies, in particular electrical frequencies. In a wind turbine, a frequency converter is used to interface the AC (alternating current) power from the generator to the AC power of the utility grid. The power, provided by the stator as current or voltage, has a varying frequency proportional to the rotor speed. PWM (pulse width modulating) switching may be used for the frequency converter.

Full-scale frequency converters are widely used in wind turbines. Due to power balance of the grid-side converter and the generator-side converter, harmonic currents and/or power may be coupled from the generator to the grid. For example, a turbine current will have a harmonic current at the same frequency if a permanent magnet generator of the turbine has a harmonic current at two times the electrical frequency of the generator. Moreover, the generator may have harmonic currents at drive train resonance frequencies, and so does the grid-side converter. On the other hand, the grid-side converter has some typical harmonic currents such as $5^{th}$, $7^{th}$, $11^{th}$ and $13^{th}$ etc due to its PWM (pulse width modulation) switching.

A grid code may provide some strict requirements for harmonic contents of a wind turbine and wind farm. In some cases, wind farms are not allowed to connect to a grid due to a non compliance with such grid codes. Moreover, harmonic currents may increase converter and transformer losses and can excite grid oscillation.

In order to fulfill such a grid code requirement, harmonics study is normally performed during wind farm design stage. If a certain harmonic current component exceeds a harmonic requirement limit, a passive harmonic filter in the form of hardware might be installed. Installing a harmonic filter to suppress harmonic current is costly and might result in a resonance at another frequency.

Thus, there may be a need for a controller being able to efficiently control harmonic currents when converting a power from a generator for delivery to a utility grid.

Summary of the Invention

This need may be met by the subject matter according to the independent claims. Advantageous embodiments of the present invention are described by the dependent claims.

According to an aspect of the invention, a harmonic current controller for controlling harmonic currents being generated by a grid-side converter of a frequency converter is provided. The frequency converter is adapted to convert an electrical input power of a power supply unit having a first frequency into an electrical output power having a second frequency, wherein the electrical output power is provided to a (utility) grid, wherein a grid-side controller (being part of the frequency converter) is adapted to control the grid side power conversion, wherein, during the conversion, at least some harmonic currents are generated by the grid side converter. The harmonic current controller comprises an input terminal being adapted to receive a first and a second current feedback signal received from a frame transformation of a measured three-phase grid current (the feedback signals may be the output from the frame transformation on measured three-phase grid currents), and a first and a second harmonic current reference signal for each harmonic current to be controlled, a comparator unit being adapted to compare the first and the second current feedback signal with the first and the second harmonic current reference signal, respectively, wherein the output signals of the comparator unit are a first regulating error signal and a second regulating error signal, and a regulating unit being adapted to receive the first regulating error signal and the second regulating error signal, to determine a first harmonic voltage control signal and a second harmonic voltage control signal based on the error signals, wherein the harmonic current controller is adapted to supply the voltage control signals to a further unit of the grid-side controller in order to control the harmonic currents generated by the grid side converter.

"Harmonic currents" in this context may refer to the harmonics of a current signal, wherein the current signal consists of a fundamental current signal (fundamental wave) and one or more harmonic current signals (harmonic waves).

In one embodiment, the power supply unit is a generator of a power generation system, in particular a wind turbine.

The wind turbine may comprise a tower, a nacelle mounted on top of the tower, and a rotor rotatably supported within the shaft, wherein at the rotor one or more rotor blades are mounted. The rotor shaft may mechanically be coupled to the generator for generating electric energy when the rotor shaft rotates due to wind impacting on the rotor blades.

In particular, the generator of the wind turbine may generate variable frequency AC power (or an AC power stream) which may be supplied to the frequency converter, which may be a full-scale converter. AC power in this context may refer to current or voltage with a specific frequency. The frequency converter may first convert the variable frequency AC power to a DC power and may then convert the DC power to a fixed frequency AC power having the frequency of the utility grid under normal conditions, i.e. the nominal grid frequency.

The term "utility grid" may denote a grid to which the power generation system supplies energy and from which one or more consumers extract electrical energy.

The harmonic current controller may comprise an output terminal for supplying the voltage control signals to a further unit of the grid-side controller in order to control the harmonic currents generated by the grid side converter.

As already mentioned, due to switching procedure in the frequency converter and design of the frequency converter, the grid-side converter may generate additional harmonic components, called harmonic currents.

In particular, the electrical output power may comprise a fundamental component and additional harmonic components, wherein the fundamental component may be a fundamental frequency of a periodic waveform. The fundamental frequency may be the lowest frequency of the periodic waveform. The fundamental component, also called fundamental current, may be extracted from the electrical output power by means of a Fourier analyses and/or an electronic filter procedure. The electronic filter procedures may be an analog filter procedure and/or a digital filter procedure.

In the analysis of three-phase electrical power systems, the concept of symmetrical components may be used. The three-phase electrical power system is thereby expressed by a positive sequence component, a negative sequence component and a zero sequence component. The positive sequence component describes a system or field which rotates in the same direction as the original three-phase electrical power system. The negative sequence component describes a system or field which rotates in the opposite direction compared to the rotational direction of the original three-phase electrical power system, and the zero sequence component describes a system or field that oscillates but does not rotate.

The harmonic current controller as described above may be used for regulating or reducing harmonic components produced or generated by the grid-side converter which occur in the electrical output in order to comply with harmonic current requirements of the utility grid. The harmonic current controller may be configured for using harmonic current reference values, current feedback signals and a grid frequency in combination with positive and negative sequence regulators to obtain voltage command or control signal. The grid frequency may be used for determining the harmonic current reference values.

According to an embodiment, the first current feedback signal corresponds to the d-axis component of the current provided to the grid-side controller and the second current feedback signal corresponds to the q-axis component of the current provided to the grid-side controller.

A three-phase current input signal may be converted into a d-axis component Id and a q-axis component Iq of the current. These components are also called current feedback signals as they are dependent on the grid frequency which is fed back to the harmonic current controller. The two components may be derived from the fundamental current controller which is responsible for controlling the fundamental component of the current.

According to a further embodiment, the harmonic current controller further comprises a filter unit being adapted to filter the first and the second current feedback signal before supply to the comparator unit in order to determine a respective part of the first current feedback signal corresponding to a respective harmonic of the current and to determine a respective part of the second current feedback signal corresponding to the same respective harmonic of the current, wherein the comparator unit is adapted to compare the respective parts of the first and the second current feedback signal with the first and the second harmonic current reference signal, respectively, wherein the output signals of the comparator unit are a first regulating error signal and a second regulating error signal for the respective harmonic of the current.

The harmonic current controller as described herein can be used to regulate a few harmonic currents with different frequencies. Although described in connection with one or two harmonic currents, it may be extended to an infinite number of harmonic currents. This will also be seen in connection with the figures.

According to this embodiment, the feedback current signals Id and Iq may be filtered. After this filtering, the signal components relating to one harmonic current may remain (for instance the nth harmonic) and are then compared with harmonic current reference values Idnhref and Iqnhref. The results of this comparison are the regulating error signals (Idnerr, Iqnerr) for nth harmonic currents in dq frame. There are both positive-sequence and negative sequence components in the regulating errors (Idnerr, Iqnerr).

According to a further embodiment, the harmonic current controller further comprises a first transformation unit and a second transformation unit, wherein the first transformation unit is adapted to perform a positive frame transformation on the first and the second regulating error signal, and wherein the second transformation unit is adapted to perform a negative frame transformation on the first and the second regulating error signal.

According to this embodiment, the regulating error signals may be converted to two rotating frames, +n frame and -n frame, by a frame transformation. The +n frame may be rotating with speed $+ n\omega_e$ related to the dq frame, while the -n frame may be rotating with speed $-n\omega_e$ related to the dq frame. This transformation may be used for transferring the signals from the dq frame to the +n/-n frame for the following calculation or control steps.

According to a further embodiment, the regulating unit is adapted to regulate harmonic current errors to zero in the positive and the negative n-frame.

For instance PI controllers may be used to regulate the harmonic current error to zero or near zero, in both +n frame and -n frame. If the errors are zero, the values of the harmonic currents follow the reference values.

According to a further embodiment, the harmonic current controller further comprises a third transformation unit and a fourth transformation unit, wherein the third transformation unit is adapted to perform a reverse frame transformation on the output signal of the regulating unit from positive (+n) n-frame to dq frame, and wherein the fourth transformation unit is adapted to perform a reverse frame transformation on the output signal of the regulating unit from negative (-n) n-frame to dq frame. The harmonic voltage commands in the dq frame may be added together respectively. With the herein described harmonic current controller, both phase and amplitude of harmonic currents may be fully controlled.

According to a further embodiment (which corresponds to another configuration of the harmonic controller), the harmonic current controller is adapted to process each harmonic of the current separately, wherein both current feedback signals are used for each harmonic current.

The processing branch for each harmonic current may comprise all components as described above. An infinite number of harmonic currents may be processed and regulated.

According to a further embodiment, the harmonic current controller is adapted to process the first current feedback signal and the second current feedback signal separately.

According to this embodiment, there may exist a processing branch for each feedback signal. In the processing branch of one feedback signal, a plurality of harmonic currents may be regulated.

According to a further embodiment, the regulating unit comprises a plurality of resonant regulators, wherein a single resonant regulator is used per current feedback signal and per harmonic of the current.

The current feedback signals Id and Iq may be filtered and then compared with the harmonic current references Idnhref and Iqnhref so that the regulating error signals (Idnerr, Iqnerr) for the nth harmonic current in the dq frame may be generated. Resonant regulators may be used to regulate the corresponding harmonics at both d-axles and q-axles. For each harmonic, for example nth harmonic, there may be one resonant regulator in Id, and one resonant regulator in Iq. The output of the resonant regulators may be the harmonic voltage command or control signal. These signals may be added together respectively at both d-axles and q-axles. With the described harmonic current controller, both phase and amplitude of harmonic currents can be fully controlled.

According to a further embodiment, there is provided a current controller of a grid-side controller, the current controller comprises a fundamental current controller, and the harmonic current controller having the above described features. The fundamental current controller may be used for controlling the fundamental component of the current.

According to a further embodiment, there is provided a frequency converter for converting a frequency of an electrical input power, wherein the electrical input power is provided by a generator, wherein the frequency converter comprises a generator-side converter, and a grid-side converter, wherein the grid-side converter comprises the current controller as described above.

According to a further embodiment, there is provided a power generation system, in particular a wind turbine system, in particular for supplying electrical power to a utility grid. The power generation system comprises a power supply unit, in particular a generator, and the frequency converter as described above.

According to a further aspect of the invention, a method for controlling harmonic currents being generated by a grid-side converter of a frequency converter is provided. The frequency converter is adapted to convert an electrical input power of a power supply unit having a first frequency into an electrical output power having a second frequency, wherein the electrical output power is provided to a grid, wherein a grid-side controller is adapted to control the grid side part of the power conversion, wherein, during the conversion, at least some harmonic currents are generated by the grid side converter. The method comprises receiving a first and a second current feedback signal received from a frame transformation of a measured three-phase grid current, and a first and a second harmonic current reference signal for each harmonic current to be controlled, comparing the first and the second current feedback signal with the first and the second harmonic current reference signal, respectively, wherein the output signals of the comparator unit are a first regulating error signal and a second regulating error signal, receiving the first regulating error signal and the second regulating error signal, determining a first harmonic voltage control signal and a second harmonic voltage control signal based on the error signals, and supplying the voltage control signals to a further unit of the grid-side controller in order to control the harmonic currents generated by the grid side converter.

According to a further aspect of the invention, there is provided a computer program for controlling harmonic currents being generated by a grid-side controller of a frequency converter. The computer program, when being executed by a data processor, is adapted for controlling the method as described above.

As used herein, reference to a computer program is intended to be equivalent to a reference to a program element containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

According to a further aspect of the invention there is provided a computer-readable medium (for instance a CD, a DVD, a USB stick, a floppy disk or a hard disk), in which a computer program for controlling harmonic currents being generated by a grid-side controller of a frequency converter is stored, which computer program, when being executed by a processor, is adapted to carry out or control a method for controlling a frequency converter.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings to which the invention is not limited.

Fig. 1 illustrates a harmonic current controller for controlling harmonic currents being generated by a grid-side converter of a frequency converter according to an embodiment;

Fig. 2 illustrates a grid-side controller of a frequency converter according to an embodiment;

Fig. 3 illustrates a current controller comprising a fundamental current controller and a harmonic current controller according to an embodiment;

Fig. 4 illustrates a harmonic current controller according to a further embodiment;

Fig. 5 illustrates a harmonic current controller according to a further embodiment; and

Fig. 6 illustrates a wind turbine comprising a frequency converter according to an embodiment.

Detailed Description

The illustration in the drawings is in schematic form. It is noted that in different figures, similar or identical elements are provided with the same reference signs.

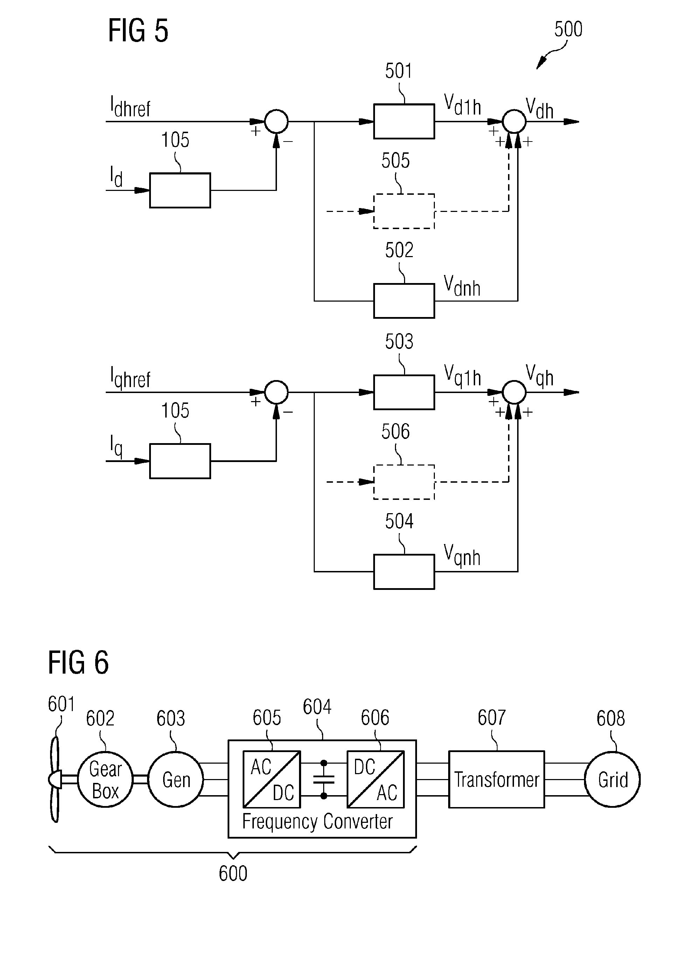

Figure 6 shows a wind turbine 600 according to an exemplary embodiment. The wind turbine 600 comprises a rotor 601 with rotor blades. The rotor 601 is connected to a generator 603 by a gear box 602. However, in case that the wind turbine 600 is a direct drive wind turbine the gear box 602 may be omitted.

The generator 603 of the wind turbine 600 is electrically connected with a power grid 608 by a frequency converter 604 and a transformer 607. The frequency converter comprises an AC-to-DC stage 605 for converting a first AC power being generated by the generator 603 into a DC power. The frequency converter 604 further comprises a DC-to-AC stage 606 for converting the DC power into a second AC power being received from the power grid 608 via the transformer 607.

The frequency converter has generator-side converter modules and grid-side converter modules with DC link capacitors in between. Both generator-side converter modules and grid-side converter modules are power electronics devices made of PWM-controlled IGBTs or other devices.

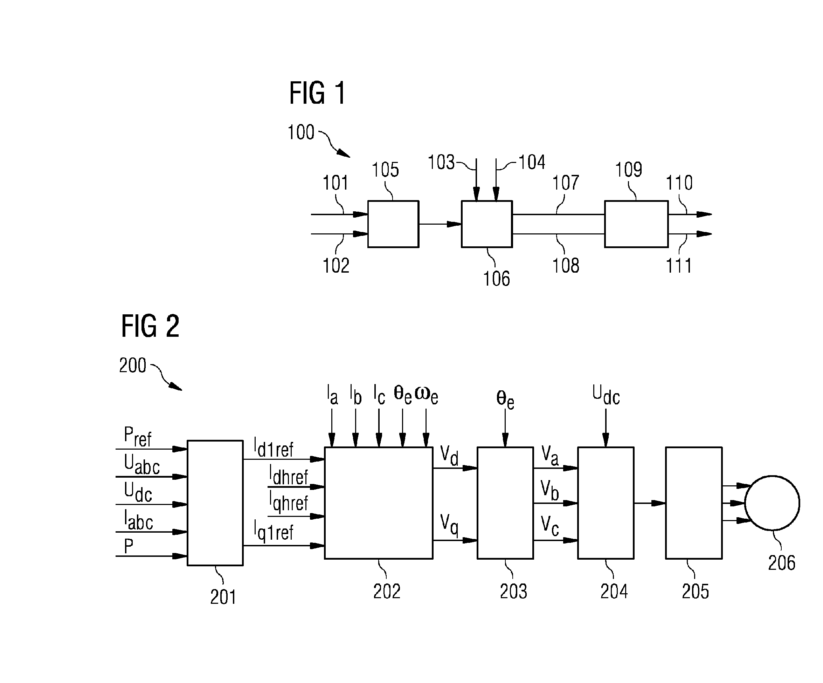

Fig. 2 shows a diagram of the grid-side controller 200 for the frequency converter. A current reference calculation block 201 is used for a fundamental current reference in synchronous rotating d-q frame. The input to the block could be power reference (Pref), grid voltage (Uabc), dc link voltage (Udc), grid current (Iabc) and power (P). It is also possible to use some combination of these signals as inputs. Current references (input to the current controller 202) could be calculated based on the grid voltage controller, fault ride through requirements and the like, depending on application requirements.

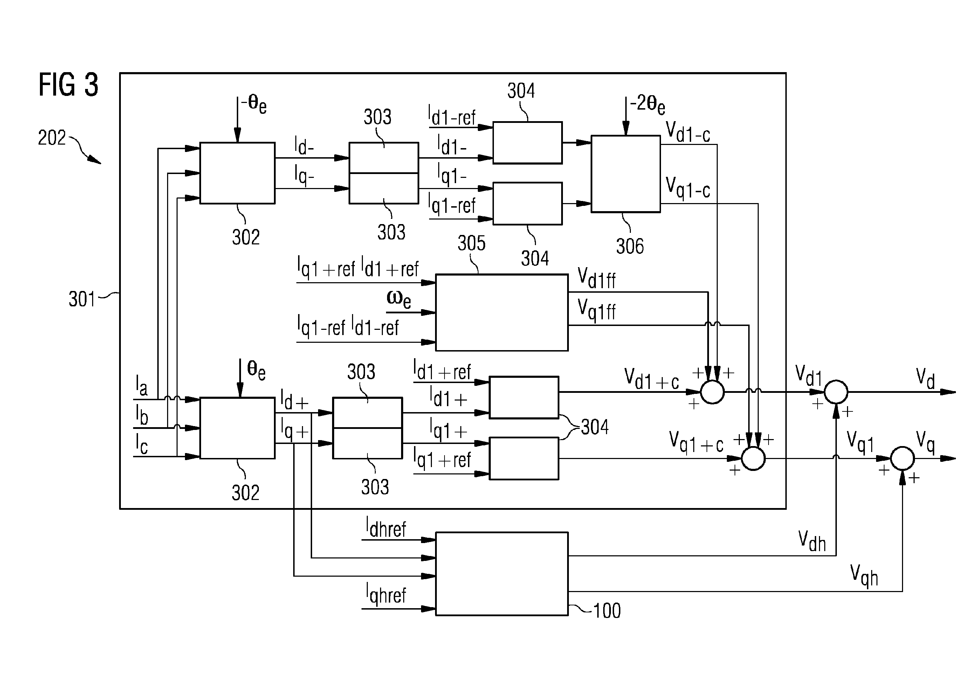

The current controller block 202 is a closed-loop feedback regulation of the grid current in d-q frame. For better dynamic performance and decoupling, voltage feed forward is also used in this block. More details of the current controller are shown in Fig. 3.

The current controller 202 receives also a phase $\Theta_e$ and a frequency $\omega_e$, of the grid current/voltage and the different parts Ia, Ib, Ic of the grid current. Voltage control signals Vd, Vq are forwarded to a module 203 (dq/abc) for controlling the grid voltages. In a next modulator block 204 receiving the grid voltages and the dc link voltage, a signal is modulated before being forwarded to a converter 205. The converter converts the signal to a signal which can be supplied to the grid 206.

Fig. 3 shows the block diagram of the current controller 202. It comprises a fundamental current controller 301 configured for using fundamental positive-sequence and negative-sequence current references, current feedback signals and grid frequency in combination with fundamental positive and negative sequence regulators (Id1+ regulator, Iq1+ regulator, Id1- regulator, Iq1- regulator (304)) and voltage feed-forward (305) providing fundamental voltage commands (Vd1, Vq1). In the fundamental current controller, some frame transformations 302 and reverse frame transformations 306 as well as filter functions 303 may be carried out for transforming signals between the different frames.

A current feedback signal Id, Iq from the fundamental current controller are forwarded to a harmonic current controller 100. The harmonic current controller is configured for using harmonic current reference (Idhref, Iqhref), current feedback signals and grid frequency in combination with positive and negative sequence regulators to obtain the voltage command signals (Vdh, Vqh).

Further, the output signals of the fundamental current controller and the harmonic current controller may be added via summation elements to achieve the converter control signals Vd, Vq.

In Fig. 3, the positive-sequence fundamental current controller in synchronous d-q frame $+\omega_e$, is well known. $\omega_e$, is the grid frequency. To regulate negative-sequence fundamental current, the three-phase current can be converted to a rotating frame with $-\omega_e$, speed by frame transformation. The fundamental negative-sequence current is converted from ac to dc after the transformation. PI controller can be used to regulate the negative current following their references in this rotating frame. For achieving better dynamic performance and decoupling, voltage feed-forward is also used in this rotating frame. The outputs of voltage feed-forward and positive and negative sequence current regulators are added together giving fundamental voltage commands.

The harmonic current controller shown in Fig. 3 is used to regulate harmonic currents to follow harmonic current references. One embodiment of such a harmonic current controller is shown in Fig. 1.

Fig. 1 illustrates a harmonic current controller 100 for controlling harmonic currents being generated by a grid-side converter of a frequency converter. The harmonic current controller 100 comprises an input terminal being adapted to receive a first 101 and a second 102 current feedback signal received from the fundamental current controller 301. The harmonic current controller further receives a first 103 and a second 104 harmonic current reference signal for each harmonic current to be controlled.

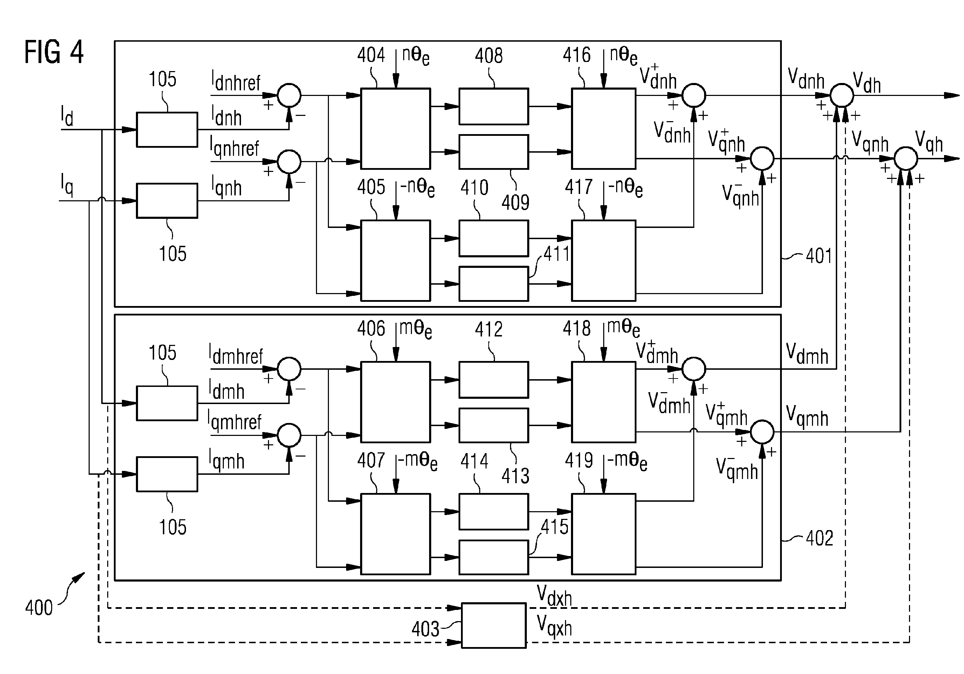

A filter unit 105 may be used for filtering the current feedback signals dependent on the following blocks. The filter unit will be described in connection with the Figs. 4 and 5.

The harmonic current controller comprises a comparator unit 106 being adapted to compare the first and the second current feedback signal with the first and the second harmonic current reference signal, respectively. The output signals of the comparator unit are a first regulating error signal 107 and a second regulating error signal 108.

The harmonic current controller further comprises a regulating unit 109 being adapted to receive the first regulating error signal 107 and the second regulating error signal 108, to determine a first harmonic voltage control signal 110 and a second harmonic voltage control signal 111 based on the error signals 107, 108. The harmonic current controller 100 is adapted to supply the voltage control signals to a further unit of the grid-side controller in order to control the harmonic currents generated by the grid side converter.

Fig. 4 shows one embodiment 400 of the harmonic current controller 100. It can be used to regulate a few harmonic currents with different frequencies. The details of nth harmonic current controller 401 and mth harmonic current controller 402 are shown in the figure. The same method can be extended to infinite number of harmonic currents. The nth harmonic current controller is taken here as an example (the numbers in brackets refer to the mth harminic current controller). The feedback Id and Iq currents are filtered 105 then compared with harmonic current references Idnhref and Iqnhref so that the regulating errors (Idnerr, Iqnerr) for nth harmonic currents in the dq frame are produced. There are both positive-sequence and negative sequence components in the regulating errors (Idnerr, Iqnerr). The regulating errors are converted via frame transformation units 404, 405 (406, 407) to two rotating frames, +n frame and -n frame, by frame transformation. The +n frame is rotating with speed $+n\omega_e$, related to dq frame, while the -n frame is rotating with speed $-n\omega_e$ related to dq frame. After the frame conversions, regulators 408, 409, 410, 411 (412, 413, 414, 415) such as PI controllers are used to regulate harmonic current errors to 0 in both +n frame and -n frame. After that, reverse frame transformations 416, 417 (418, 419) are used to convert the harmonic voltage commands (output of the regulators) from +n/-n frame to dq frame. The harmonic voltage commands in dq frame are added together respectively. With the proposed harmonic current controller, both phase and amplitude of harmonic currents can be fully under control.

Fig. 5 shows a further embodiment 500 of the harmonic current controller 100. It can be used to regulate a few harmonic currents with different frequencies. The same method can be extended to infinite number of harmonic currents. The feedback Id and Iq current are filtered 105 and then compared with harmonic current references Idnhref and Iqnhref so that the regulating errors (Idnerr, Iqnerr) for nth harmonic currents in dq frame are produced. Resonant regulators 501-506 are used to regulate the corresponding harmonics at both d-axles and q-axles. For each harmonic, for example nth harmonic, there are one resonant regulator for nth harmonic in Id (501) and one resonant regulator for nth harmonic in Iq (503). For the mth harmonic, there is a resonant regulator 502 in Id and one 504 in Iq, for the xth harmonic, there are resonant regulators 505, 506 The output of the resonant regulators is a harmonic voltage command or control signal. They are added together respectively at both d-axles and q-axles. With the proposed harmonic current controller, both phase and amplitude of harmonic currents can be fully under control.

The resonant controller can regulate any harmonic at certain frequency. The typical transfer function of resonant regulator is:

$$RR(s) = k_p + k_i \frac{4\pi f_1 \xi_1 S}{s^2 + 4\pi f_1 \xi_1 s + (2\pi f_1)^2}$$

wherein $f_1$ is the resonant frequency and $\xi_1$ is the damping of the controller.

The harmonic current controller as described above may provide the advantage that it brings better compliance with grid codes, avoids grid oscillation due to wind turbine harmonic currents, minimizes harmonic currents of wind turbine and wind farm reduce converter losses, has no additional cost and has no change requirements for hardware of available products.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A harmonic current controller (100) for controlling harmonic currents being generated by a grid-side converter (606) of a frequency converter, the frequency converter being adapted to convert an electrical input power of a power supply unit having a first frequency into an electrical output power having a second frequency, wherein the electrical output power is provided to a grid,

   wherein a grid-side controller is adapted to control the grid side part of the power conversion,
   wherein, during the conversion, at least some harmonic currents are generated by the grid side converter, the harmonic current controller (100) comprises

an input terminal being adapted to receive a first (101) and a second (102) current feedback signal received from a frame transformation of a measured three-phase grid current, and a first (103) and a second (104) harmonic current reference signal for each harmonic current to be controlled,

a comparator unit (106) being adapted to compare the first and the second current feedback signal with the first and the second harmonic current reference signal, respectively, wherein the output signals of the comparator unit are a first regulating error signal (107) and a second regulating error signal (108), and

a regulating unit (109) being adapted to receive the first regulating error signal (107) and the second regulating error signal (108), to determine a first harmonic voltage control signal (110) and a second harmonic voltage control signal (111) based on the error signals (107, 108),

wherein the harmonic current controller (100) is adapted to supply the voltage control signals to a further unit of the grid-side controller (200) in order to control the harmonic currents generated by the grid side converter.

2. The harmonic current controller (100) as set forth in claim 1, wherein the first current feedback signal (101) corresponds to the d-axis component of the current provided to the grid-side controller and wherein the second current feedback signal (102) corresponds to the q-axis component of the current provided to the grid-side controller.

3. The harmonic current controller (100) as set forth in claim 1, further comprising a filter unit (105) being adapted to filter the first (101) and the second (102) current feedback signal before supply to the comparator unit (106) in order to determine a respective part of the first current feedback signal corresponding to a respective harmonic of the current and to determine a respective part of the second current feedback signal corresponding to the same respective harmonic of the current,

wherein the comparator unit (106) is adapted to compare the respective parts of the first and the second current feedback signal with the first and the second harmonic current reference signal, respectively, wherein the output signals of the comparator unit are a first regulating error signal (107) and a second regulating error signal (108) for the respective harmonic of the current.

4. The harmonic current controller (400) as set forth in claim 3, further comprising a first transformation unit (404) and a second transformation unit (405),

wherein the first transformation unit is adapted to perform a positive frame transformation on the first and the second regulating error signal (107, 108), and

wherein the second transformation unit is adapted to perform a negative frame transformation on the first and the second regulating error signal (107, 108).

5. The harmonic current controller (400) as set forth in any one of the claims 3 to 4,

wherein the regulating unit (408, 409, 410, 411) is adapted to regulate harmonic current errors to zero in the positive and the negative n-frame.

6. The harmonic current controller (400) as set forth in any one of the claims 3 to 5, further comprising a third transformation unit (416) and a fourth transformation unit (417),

wherein the third transformation unit is adapted to perform a reverse frame transformation on the output signal of the regulating unit from positive n-frame to dq frame, and

wherein the fourth transformation unit is adapted to perform a reverse frame transformation on the output signal of the regulating unit from negative n-frame to dq frame.

7. The harmonic current controller (400) as set forth in any one of the claims 3 to 6, wherein the harmonic current controller is adapted to process each harmonic of the current separately, wherein both current feedback signals are used for each harmonic.

8. The harmonic current controller (500) as set forth in any one of the claims 1 to 2, wherein the harmonic current controller is adapted to process the first current feedback signal and the second current feedback signal separately.

9. The harmonic current controller (500) as set forth in claim 8, wherein the regulating unit comprises a plurality of resonant regulators (501, 502, 505), wherein a single resonant regulator is used per current feedback signal and per harmonic of the current.

10. A current controller (202) of a grid-side controller (200), the current controller comprising a fundamental current controller (301), and

the harmonic current controller (100) as set forth in any one of the claims 1 to 9.

11. A frequency converter (604) for converting a frequency of an electrical input power, wherein the electrical input power is provided by a generator (603),
   wherein the frequency converter comprises a generator-side converter, and
   a grid-side converter, wherein the grid-side converter comprises the current controller (100) as set forth in claim 10.

12. A power generation system (600), in particular a wind turbine system, in particular for supplying electrical power to a utility grid, the power generation system comprising
   a power supply unit, in particular a generator (603), and
   the frequency converter (604) as set forth in claim 11.

13. A method for controlling harmonic currents being generated by a grid-side converter of a frequency converter, the frequency converter being adapted to convert an electrical input power of a power supply unit having a first frequency into an electrical output power having a second frequency, wherein the electrical output power is provided to a grid,

   wherein a grid-side controller is adapted to control the grid side part of the power conversion,
   wherein, during the conversion, at least some harmonic currents are generated by the grid side converter,
   the method comprises

   receiving a first (101) and a second (102) current feedback signal received from a frame transformation of a measured three-phase grid current, and a first (103) and a second (104) harmonic current reference signal for each harmonic current to be controlled,
   comparing the first and the second current feedback signal with the first and the second harmonic current reference signal, respectively, wherein the output signals of the comparator unit are a first regulating error signal (107) and a second regulating error signal (108),
   receiving the first regulating error signal (107) and the second regulating error signal (108),
   determining a first harmonic voltage control signal (110) and a second harmonic voltage control signal (111) based on the error signals (107, 108), and
   supplying the voltage control signals to a further unit of the grid-side controller in order to control the harmonic currents generated by the grid side converter.

14. A computer program for controlling harmonic currents being generated by a grid-side controller of a frequency converter, the computer program, when being executed by a data processor, is adapted for controlling the method as set forth in claim 13.

FIG 1

FIG 2

FIG 3

FIG 4

## FIG 5

## FIG 6

Europäisches
Patentamt
European
Patent Office
Office européen
des brevets

**EUROPEAN SEARCH REPORT**

Application Number

EP 12 19 9476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 472 775 B1 (HUANG FENGTAI [CA] ET AL) 29 October 2002 (2002-10-29) * column 4, line 61 - column 5, line 36; figures 12,3 * | 1-13 | INV. H02M1/12 H02J3/38 H02M7/5387 |
| A | EP 1 560 312 A2 (ABB OY [FI]) 3 August 2005 (2005-08-03) * the whole document * | 1-14 | |

TECHNICAL FIELDS
SEARCHED (IPC)

H02M
H02J

The present search report has been drawn up for all claims

| Place of search | Date of completion of the search | Examiner |
|---|---|---|
| The Hague | 9 January 2014 | Gentili, Luigi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 19 9476

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2014

| Patent document cited in search report | | Publication date | Patent family member(s) | | Publication date |
|---|---|---|---|---|---|
| US 6472775 | B1 | 29-10-2002 | NONE | | |
| EP 1560312 | A2 | 03-08-2005 | EP | 1560312 A2 | 03-08-2005 |
| | | | FI | 20040110 A | 28-07-2005 |
| | | | US | 2005195624 A1 | 08-09-2005 |

For more details about this annex : see Official Journal of the European Patent Office, No. 12/82